# EUROPÄISCHE PATENTANMELDUNG

(11) **EP 0 634 556 A2**
(43) Veröffentlichungstag der Anmeldung: **18.01.1995**
(21) Anmeldenummer: 94109976.4
(22) Anmeldetag: 28.06.1994
(51) Int. Cl.: E06B 3/984

(54) **Fensterflügelrahmen und Verfahren zur Herstellung der Rahmenhölzer hierfür**

(30) Priorität: 15.07.1993 DE 4323628
(71) Anmelder: Hirsch, Wilhelm, D-72793 Pfullingen (DE)
(72) Erfinder: Rauscher, Martin, D-72531 Hohenstein 3 (DE)
(74) Vertreter: Liebau, Gerhard, Dipl.-Ing.

(57) **Zusammenfassung**

Der Fensterflügelrahmen besteht aus zwei ersten (vertikalen) und zwei zweiten (horizontalen) Rahmenhölzern (1, 2), die durch an ihren Enden vorgesehene Zapfen- und Schlitzverbindungen (3 - 8) an den vier Ecken des Rahmens miteinander verbunden sind. Die zweiten Rahmenhölzer (2) weisen im Bereich ihrer Überschlagteile an ihren Enden jeweils eine sich in der Rahmenebene über die ganze Breite (B) des Überschlagteils erstreckende, etwa 3 - 6 mm über den Grund des dort befindlichen Schlitzes (7) vorstehende Stützfeder (9) auf. An den ersten Rahmenhölzern (1) sind im Bereich ihrer Überschlagteile an deren den Glashalteleisten zugekehrten Innenseiten (1c) zum Eingriff der Stützfedern (9) Stütznuten (11) vorgesehen. Die Stütznuten (11) sind nur im Bereich der Schlitze (4) und Zapfen (3) vorgesehen, wobei die Länge (L) jeder Stütznut (11) von der zugehörigen Stirnseite (1d) des Rahmenholzes (1) nur der Breite (B) des Überschlagteiles (1b) bzw. der Länge der Stützfeder (9) entspricht oder nur geringfügig länger ist als diese.

## Beschreibung

Die Erfindung betrifft einen Fensterflügelrahmen, bestehend aus zwei ersten Rahmenhölzern und zwei senkrecht zu diesen angeordneten, zweiten Rahmenhölzern, die durch an ihren Enden vorgesehene Zapfen- und Schlitzverbindungen an den vier Ecken des Rahmens miteinander verbunden sind, wobei die zweiten Rahmenhölzer im Bereich ihrer Überschlagteile an ihren Enden jeweils eine sich in der Rahmenebene über die ganze Breite des Überschlagteiles erstreckende, etwa 3 - 6 mm über den Grund des dort befindlichen Schlitzes vorstehende Stützfeder aufweisen und an den ersten Rahmenhölzern im Bereich ihrer Überschlagteile an deren den Glashalteleisten zugekehrten Innenseiten zum Eingriff der Stützfedern Stütznuten vorgesehen sind, deren Querschnitt dem der Stützfedern entspricht. Die Erfindung betrifft auch ein Verfahren zur Herstellung der ersten Rahmenhölzer für einen derartigen Flügelrahmen.

Bei Fensterflügelrahmen GB 2 137 556 A wird der der Innenseite des Gebäudes zugekehrte Teil des Rahmens als Überschlag oder Überschlagteil bezeichnet. An der der Fensterscheibe zugekehrten Innenseite des Überschlagteiles liegt jeweils die Glashalteleiste auf, während der äußere Abschnitt des Überschlagteiles den Blendrahmen an der Innenseite des Gebäudes überdeckt. Da die Überschlagteile an ihren Enden dazu neigen, sich nach längerer Zeit gegeneinander zu verwinden, was insbesondere bei dem Überschlagteil des ersten, in der Regel vertikalen Rahmenholzes der Fall ist, hat man an den Enden der zweiten, in der Regel horizontalen Rahmenhölzer im Bereich der jeweiligen Überschlagteile die oben erwähnten Stützfedern vorgesehen, die nach dem Zusammenfügen der Rahmenhölzer in die erwähnten Stütznuten eingreifen und damit das Verwinden verhindern.

Die Herstellung der Stütznuten erforderte jedoch bisher einen größeren maschinellen Aufwand und ist mit weiteren Nachteilen verbunden. Die Herstellung der Stütznuten erfolgt bisher beim Längsprofilieren der Rahmenhölzern indem beim Längsprofilieren ein zusätzliches Fräswerkzeug an dem für das Längsprofilieren verwendeten Fräswerkzeugsatz angeordnet wird oder das Herausarbeiten der Stütznut mit separaten Fräswerkzeugen erfolgt, die dem zum Längsprofilieren verwendeten Fräswerkzeugsatz nachgeschaltet sind. In letzterem Fall ist der maschinelle Aufwand besonders hoch und er ist bei verleimten Rahmenhälzern erforderlich. Verleimte Rahmenhölzer werden verwendet, um auch Holz von schlechter Qualität verarbeiten zu können. In diesem Fall besteht das Rahmenholz aus drei Schichten, einer der Gebäudeaußenseite zugekehrten guten Schicht, einer Mittelschicht aus Holz schlechterer Qualität und einer der Gebäudeinnenseite zugekehrten guten Schicht. Es können aber auch nur zwei Schichten sein. Da Glashalteleisten, falls sie nicht separat hergestellt werden, vielfach beim Längsprofilieren der Rahmenhölzer aus diesen herausgetrennt werden, und da die Glashalteleisten von guter Qualität sein müssen, werden sie aus der inneren Schicht herausgetrennt, die gleichzeitig auch das Überschlagteil bildet. Da die aus diesem Bereich herauszutrennende Glashalteleiste das Einfräsen der Stütznut verhindern würde, verfährt man so, daß man beim Längsprofilieren mit einem Fräswerkzeugsatz auch die Glashalteleiste profiliert, mit einer Säge, deren Achse sich senkrecht zur Achse des Fräswerkzeugsatzes erstreckt, die Glashalteleiste vom übrigen Rahmenholz trennt und den abgetrennten Teil im Anschluß an die Säge durch ein Druckwerk nach unten drückt. Hierdurch wird die Innenseite des Überschlagteiles frei und man kann dann mit dem nachfolgenden Fräswerkzeug die Stütznut einfräsen. Das Einfräsen der Stütznut erfolgt jedoch aus maschinentechnischen Gründen über die volle Länge des Rahmenholzes.

Da die gleichen Fräswerkzeuge ohne Umrüstung oder Umstellen auch zum Innenprofilieren der horizontalen Rahmenhölzer verwendet werden, wird auch an den horizontalen Rahmenhölzern eine Stütznut eingefräst, die völlig überflüssig ist. Auch die Stütznuten an den ersten (vertikalen) Rahmenhölzern sind auf einem großen Teil ihrer Länge, mit Ausnahme eines etwa 6 cm langen Bereiches, an beiden Enden der Rahmenhölzer völlig überflüssig und sogar schädlich. Durch die überflüssigen Stütznuten bzw. die überflüssigen Teile derselben wird nämlich die Auflagefläche für die Glashalteleisten verkleinert. Außerdem kann es vorkommen, daß die Glashalteleisten bei Fensterscheiben und/oder Dichtungen, die von den vorbestimmten Maßen abweichen, die Stütznuten nicht mehr vollständig überdecken, so daß diese sichtbar werden. Auch kann Kondenswasser in die Stütznuten eindringen, welches dann zum Aufquellen und im schlimmsten Fall zu einer Zerstörung der Rahmenhölzer führen kann.

Der Erfindung liegt die Aufgabe zugrunde, einen Fensterflügelrahmen der eingangs erwähnten Art zu schaffen, der mit einem geringeren maschinellen Aufwand herstellbar ist und bei dem es keine, durch überflüssige Stütznuten hervorgerufene Probleme gibt und ein Verfahren zur Herstellung der ersten Rahmenhölzer für einen solchen Fensterflügelrahmen aufzuzeigen.

Nach der Erfindung ist der Fensterflügelrahmen dadurch gekennzeichnet, daß Stütznuten nur an den ersten Rahmenhölzern und auch nur im Bereich der Schlitze und Zapfen vorgesehen sind, wobei die Länge jeder Stütznut von der zugehörigen Stirnseite des Rahmenholzes nur der Breite des Überschlagteiles bzw. der Länge der Stützfeder entspricht oder nur geringfügig länger ist als diese.

Die Erfindung geht also von dem Gedanken aus, die Stütznuten nicht mehr über die gesamte Länge der ersten (vertikalen) und auch der zweiten (horzizontalen) Rahmenhölzer einzufräsen, sondern nur noch in den Endbereichen der ersten Rahmenhölzer vorzusehen und gerade so lang auszubilden, wie es für den Eingriff der Stützfedern erforderlich ist. An den zweiten Rahmenhölzern werden überhaupt keine Stütznuten mehr eingefräst. Dies hat den Vorteil, daß sowohl an den ersten als auch an den zweiten Rahmenhölzern die Glashalteleisten immer mit ihrer vollen Breite auf den Rahmenhölzern aufliegen. Auch wenn die Dickenabmessungen der Fensterscheibe und/oder der Dichtungen nicht stimmen, werden keine Stütznuten sichtbar, da im Bereich der Glashalteleisten keine derartigen Stütznuten mehr vorhanden sind. Auch das Problem des Eindringens von Kondenswasser in die Rahmenhölzer ist damit beseitigt. Da die Stütznuten nur in den Endbereichen der ersten Rahmenhölzer vorgesehen werden, gibt es auch keine Probleme mehr beim Heraustrennen der Glashalteleisten. Der maschinelle Aufwand wird damit ebenso verringert, wie die zum Längsprofilieren erforderliche Länge der Längsprofiliereinrichtung.

Das Verfahren zur Herstellung der ersten Rahmenhölzer für einen Fensterflügelrahmen der im Anspruch 1 oder 2 angegebenen Art besteht nach der Erfindung darin, daß die Stütznuten nach dem Ablängen oder im Anschluß an das Querprofilieren und vor dem Längsprofilieren der Rahmenhölzer in einem gesonderten Arbeitsgang nur in die Endbereiche der späteren Innenseiten mittels Scheibenfräser oder einer Stemmvorrichtung von den Stirnseiten jedes Rahmenholzes her in einer Länge eingearbeitet werden, die gleich der Breite des Überschlagteiles ist oder nur geringfügig länger als dieses.

Bei der Durchführung des neuen Verfahrens ist es zunächst wesentlich, daß das Einarbeiten der Stütznuten nach dem Ablängen und vor dem Längsprofilieren erfolgt. Zum Ablängen und zum Querprofilieren werden nämlich die Rahmenhölzer festgespannt. Hierdurch ist jedes Rahmenholz in Längsrichtung genau positioniert und man kann daher die jeweilige Stütznut mit genau der gewünschten Länge, die der Breite des Überschlagteiles entspricht, einarbeiten. Hierbei soll diese Länge entweder genau der Breite des Überschlagteiles entsprechen oder nur geringfügig länger sein, wobei die geringfügig größere Länge nur dadurch entsteht, daß der zum Einfräsen verwendete Scheibenfräser noch etwas Platz für seinen Austritt benötigt und daß auch mit geringen Herstellungstoleranzen zu rechnen ist. Die Stütznut wird jedoch immer nur, gerechnet von der durch das Ablängen bestimmten Stirnseite des Rahmenholzes her, der Breite des Überschlagteiles und damit der Länge der Stützfeder entsprechen. Da die Stütznuten nur auf relativ kurzer Länge eingefräst oder eingestemmt werden, erstrecken sie sich nicht mehr in den Bereich des Rahmenholzes, aus dem später beim Längsprofilieren die Glashalteleiste herausgetrennt wird. Infolgedessen und weil die Stütznuten bereits vor dem Längsprofilieren fertiggestellt sind, braucht man beim Längsprofilieren keine Rücksicht mehr auf die Herstellung der Stütznuten zu nehmen. Dies hat den großen Vorteil, daß während des Längsprofilierens die Glashalteleiste nicht mehr heruntergedrückt zu werden braucht. Hierdurch wird der maschinelle Aufwand vereinfacht, denn das Druckwerk kann entfallen, und außerdem wird das Ausreißen oder Abbrechen der Glashalteleiste verhindert, da während des Heraustrennens kein Seitendruck mehr auf die Glashalteleiste ausgeübt wird.

Vorteilhafte Ausgestaltungen der Erfindung sind in den Unteransprüchen gekennzeichnet.

Die Erfindung wird im folgenden, anhand von in der Zeichnung dargestellten Ausführungsbeispielen näher erläutert. Es zeigen:
- Figur 1: eine schaubildliche Darstellung der Eckverbindung eines vertikalen Rahmenholzes mit einem horizontalen Rahmenholz vor dem Zusammenfügen beider Teile, von der Gebäudeinnenseite her betrachtet,
- Figur 2: eine Stirnansicht an der Ecke eines Fensterflügels in Richtung II der Figur 3,
- Figur 3: eine Draufsicht auf die Ecke mit einem Teilschnitt nach der Linie III-III der Figur 2,
- Figur 4: eine Draufsicht auf die Enden zweier vertikaler Rahmenhölzer beim Einfräsen der Stütznuten,
- Figur 5: einen Querschnitt nach der Linie V-V der Figur 4,
- Figur 6: einen ähnlichen Querschnitt unter Verwendung eines anderen Fräsers,
- Figur 7: eine Draufsicht beim Einstemmen der Stütznuten,
- Figur 8: einen Querschnitt nach der Linie VIII-VIII der Figur 7.

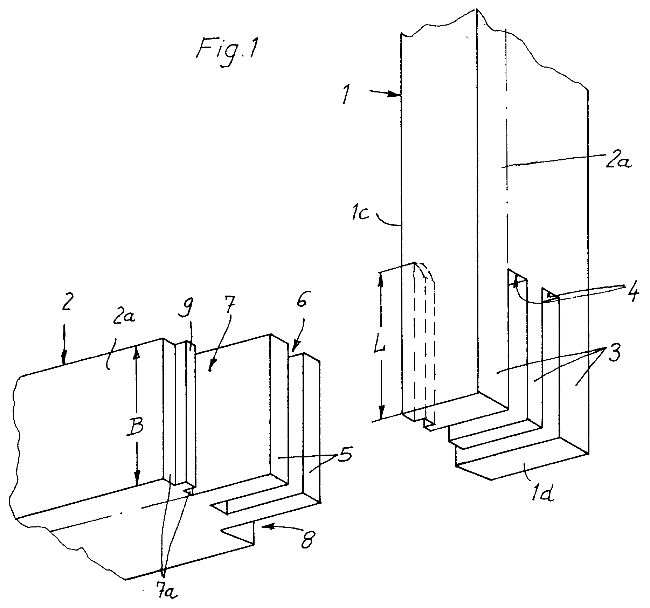

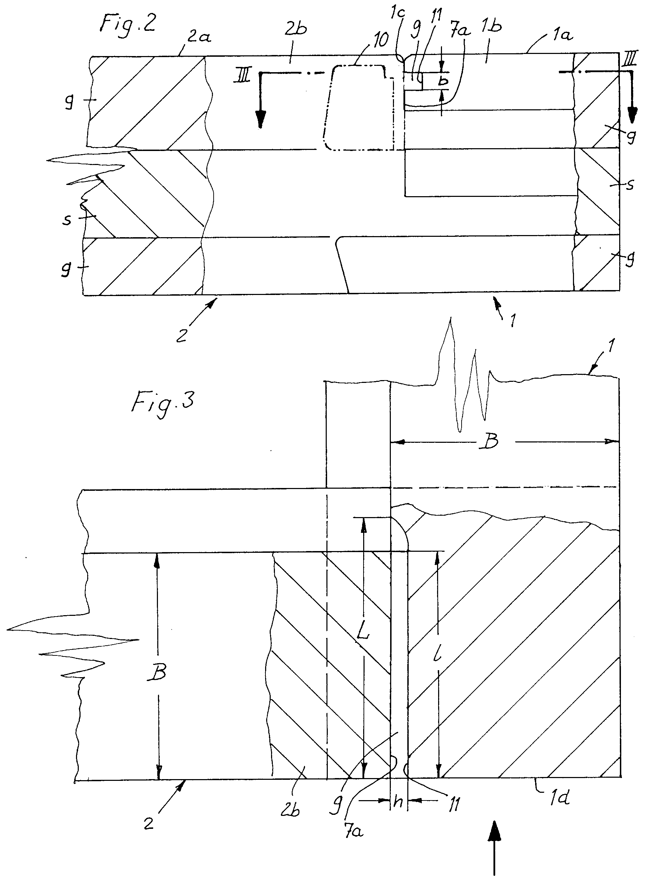

Ein Fensterflügelrahmen besteht im allgemeinen aus zwei vertikalen Rahmenhölzern und zwei horizontalen Rahmenhölzern, die an ihren Enden jeweils mit Zapfen und Schlitzen versehen sind. In Figur 1 - 3 ist jeweils nur ein vertikales Rahmenholz 1 und ein horizontales Rahmenholz 2 dargestellt. Das vertikale Rahmenholz weist an jedem seiner Enden drei oder auch mehr Zapfen 3 mit dazwischenliegenden Schlitzen 4 auf. Das horizontale Rahmenholz 2 ist an seinen beiden Enden mit zwei oder auch mehr Zapfen 5 versehen. Zwischen den beiden Zapfen 5 ist ein Schlitz 6 und an der Außenseite jedes Zapfens 5 ein zur Fensteraußen- bzw. -innenseite offener Schlitz 7 bzw. 8 vorgesehen. Die Herstellung dieser Zapfen und Schlitze erfolgt in üblicher Weise durch Querprofilieren der Rahmenhölzer mittels entsprechend profilierter Fräswerkzeugsätze, wobei dieses Querprofilieren auch als Schlitzen oder Zapfenschneiden bezeichnet wird. Die dem Gebäudeinneren zugewandten Seiten der Rahmenhölzer sind mit 1a und 2a gekennzeichnet. Die dem Gebäudeinneren zugekehrten Abschnitte des vertikalen Rahmenholzes 1 und des horizontalen Rahmenholzes 2 werden als Überschlag oder Überschlagteil bezeichnet. Es sind dies die in Figur 2, oben liegenden Abschnitte. Das horizontale Rahmenholz 2 ist im Bereich seines Überschlagteiles 2b am Ende desselben mit einer sich über die ganze Breite B des Überschlagteiles 2b erstreckenden Stützfeder 9 versehen, die über den Grund 7a des dort befindlichen Schlitzes 7 vorsteht. Die Stützfeder 9 weist eine Höhe h von etwa 3 - 6 mm und eine Breite b auf, die in diesem Bereich liegt.

Das vertikale Rahmenholz 1 ist im Bereich seines Überschlagteiles 1b, dessen Ende gleichzeitig einen der Zapfen 3 bildet, an der der strichpunktiert eingezeichneten Glashalteleiste 10 zugekehrten Innenseite 1c mit einer Stütznut 11 versehen. Diese Stütznut 11 dient zum Eingriff der Stützfeder 9 und entspricht in ihrem Querschnitt dem Querschnitt der Stützfeder 9.

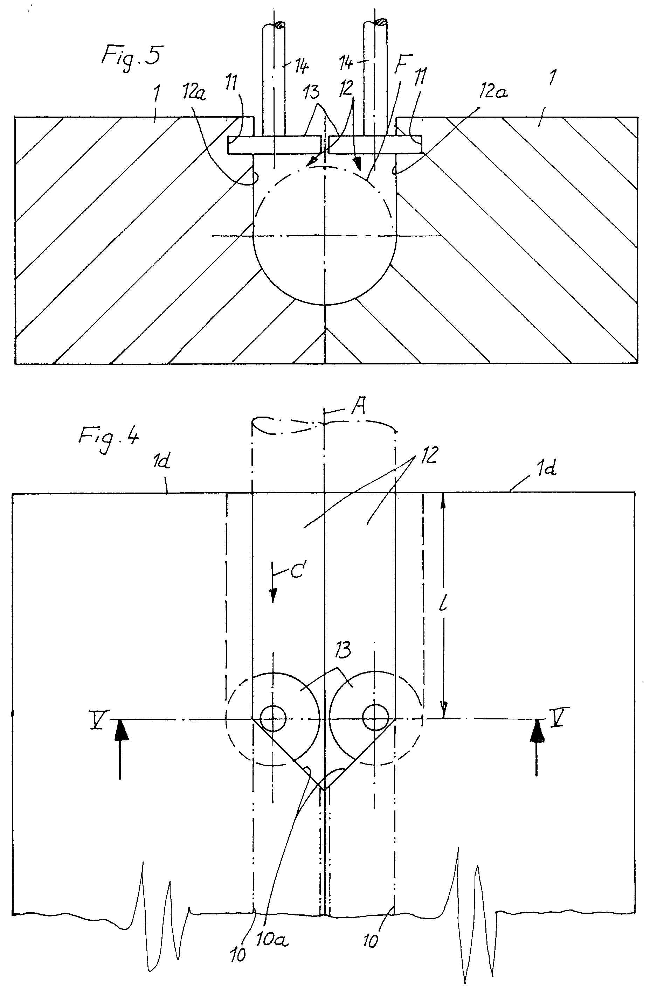

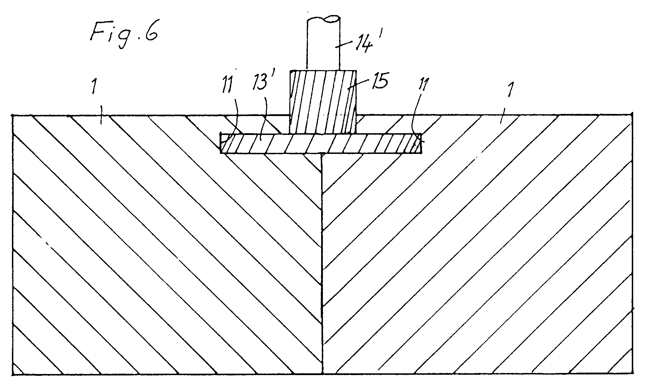

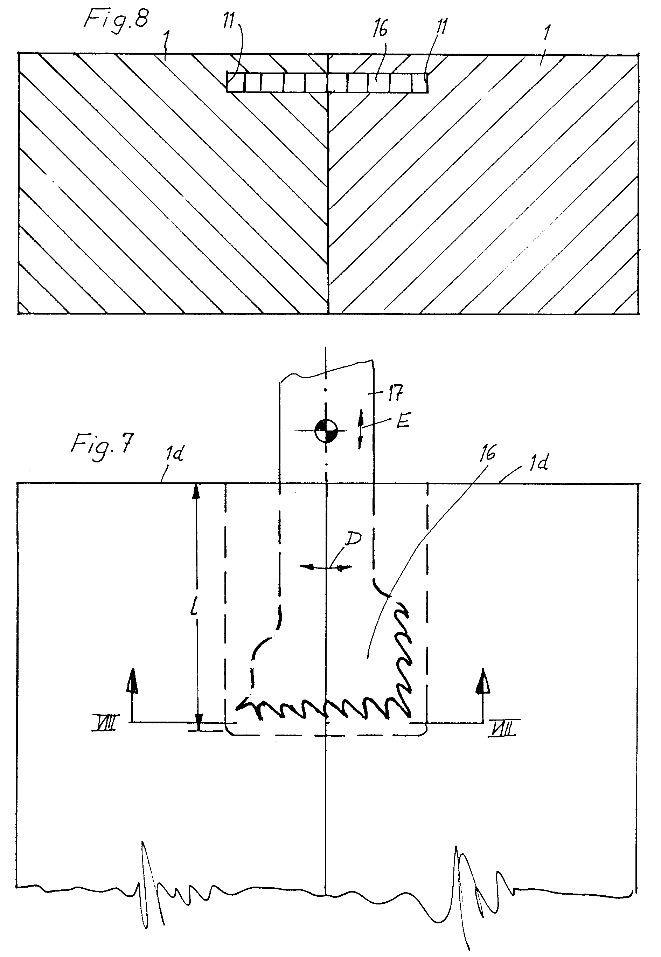

Die Besonderheit besteht nun darin, daß Stütznuten 11 nur an den vertikalen Rahmenhölzern 1 und auch nur im Bereich der Schlitze 4 und der Zapfen 3 vorgesehen sind. Die Länge L der Stütznut 11 entspricht, von der zugehörigen Stirnseite 1d des Rahmenholzes 1 aus gemessen, nur der Breite B des Überschlagteiles 1b bzw. 2b. Da die Länge l der Stützfeder 9 der Breite B des Überschlagteiles 2b entspricht, soll dementsprechend die Länge L gleich oder nur geringfügig größer sein als l. Die geringfügig größere Länge L, welche beispielsweise um 5 - 6 mm größer sein kann als die Länge l mit 60 mm, ist herstellungsbedingt. Die etwas größere Länge ist durch den Austrittsradius des in Figur 5 bzw. 6 dargestellten Scheibenfräsers bedingt. Wenn gemäß Figur 7 ein Stemmwerkzeug verwendet wird, dann entspricht die Länge L praktisch der Länge l der Stützfeder 9. Auf alle Fälle sollte die Länge l der Stütznut 11 an ihrem Nutgrund der Breite B des Überschlagteiles 2b entsprechen. Das horizontale Rahmenholz 2 weist keinerlei Stütznuten auf.

Anhand der Figuren 4 - 8 soll nachstehend erläutert werden, wie Stütznuten, die nur auf den Endbereich der vertikalen Rahmenhölzer beschränkt sind, in vorteilhafter Weise hergestellt werden können.

In modernen Fensterfertigungsanlagen werden Rahmenhölzer meist paarweise bearbeitet. Deswegen ist in den Figuren 4 - 8 auch die paarweise Bearbeitung dargestellt. Es ist jedoch auch möglich, jeweils nur ein vertikales Rahmenholz zu bearbeiten. Nachfolgend wird nur die Bearbeitung des ersten Endes der beiden paarweise aneinanderliegenden vertikalen Rahmenhölzer 1 beschrieben, wobei jedoch für die Bearbeitung des zweiten Endes sinngemäß das gleiche gilt. Die beiden Rahmenhölzer 1 werden in üblicher Weise auf einem horizontalen Arbeitstisch festgespannt und anschließend mit ihrem ersten Ende an einer Ablängsäge vorbeigeführt, wodurch die ebene Stirnfläche 1d entsteht, die beim Einbringen der Stütznuten 11 als Bezugsebene dient. Nach dem Ablängen bleiben die Rahmenhölzer weiterhin auf dem Arbeitstisch festgespannt und es kann dann entweder zunächst das Einbringen der Stütznuten erfolgen und anschließend können die Rahmenhölzer 1 an ihrem jeweiligen Ende in herkömmlicher Weise durch Querprofilieren (= Schlitzen oder Zapfenschneiden) mit den in Figur 1 dargestellten Zapfen 3 und dazwischenliegenden Schlitzen versehen werden, oder es kann zunächst das Querprofilieren erfolgen und dann das Einbringen der Stütznuten 11. In den Zeichnungen wurde davon ausgegangen, daß zunächst die Stütznuten eingebracht werden und dann das Querprofilieren erfolgt. Die bisher beschriebenen Verfahrensmaßnahmen treffen auch für die in den Figuren 6 - 8 dargestellten Verfahrensweisen zu.

Nachdem die beiden Rahmenhölzer abgelängt wurden, wird bei der in Figur 4 und 5 dargestellten Verfahrensweise zunächst mittels eines strichpunktiert dargestellten Fingerfräsers F, dessen Achse A parallel zur Längsrichtung der Rahmenhölzer 1 angeordnet ist, und der an seinem freien Ende kegelförmig mit einem Spitzenwinkel µ von 90° versehen ist, im Bereich der später noch herzustellenden Zapfen und Schlitze eine Ausnehmung 12 an jedem der beiden Rahmenhölzer 1 erzeugt. Durch diesen Fingerfräser werden, wie es in der DE 29 31 202 C2 näher beschrieben ist, die später beim Längsprofilieren aus den Rahmenhölzern herausgetrennten Glashalteleisten an ihren Enden auf Gehrung bearbeitet. Diejenigen Teile der Rahmenhölzer 1, die später die Glashalteleisten bilden, sind in Figur 4 mit strich-doppelpunktierten Linien angedeutet. Zur Herstellung der Stütznuten 11 ist ein Fräsaggregat mit zwei Scheibenfräsern 13 vorgesehen, von denen jeder am Ende eines Schaftes 14 angeordnet ist. Die Scheibenfräser 13 werden von den Stirnseiten 1d her in Richtung C in die Ausnehmung 12 hineinbewegt, wobei sie in die Seitenwände 12a der Ausnehmungen 12 die Stütznuten 11 einfräsen. Die Bewegung in Richtung C erfolgt so weit, daß die beiden erzeugten Stütznuten an ihrem Nutgrund jeweils die Länge l aufweisen, die der Breite B des Überschlagteiles 1 b entspricht. Während der Bewegung der Scheibenfräser 13 in Richtung C bewegen sich ihre Schäfte 14 und der nicht mit dem jeweiligen Rahmenholz 1 in Eingriff befindliche Teil des Scheibenfräsers 13 in der jeweiligen Ausnehmung 12. Da die beiden Rahmenhölzer 1 nach dem Ablängen weiterhin auf dem Arbeitstisch festgespannt sind, können die durch das Ablängen erzeugten Stirnflächen 1d als Bezugsflächen für die Eintauchtiefe l der Scheibenfräser 13 dienen. Es ist damit die Herstellung der Stütznuten 11 mit der vorbestimmten Länge l am Nutgrund möglich.

Anhand der Figuren 6 - 8 soll gezeigt werden, daß das Einbringen der Stütznuten auch ohne vorheriges Einfräsen der Ausnehmungen 12 möglich ist. Gemäß Figur 6 können die Stütznuten auch mit einem einzigen Scheibenfräser 13' hergestellt werden, an dessen Schaft 14' ein weiterer Fräser 15 angeordnet ist, der bei fortschreitender Bewegung des Scheibenfräsers in Längsrichtung der Rahmenhölzer 1 den für den Schaft 14' benötigten Freiraum in die Rahmenhölzer 1 fräst.

Bei der in den Figuren 7 und 8 dargestellten Verfahrensweise erfolgt die Herstellung der Stütznuten 11 mittels eines Schwingstemmmeißels 16, dessen Schaft 17 sowohl eine in Richtung D hin- und herschwingende Bewegung als auch eine in Richtung E, d.h. in Längsrichtung der Rahmenhölzer,verlaufende Bewegung ausführt. Diese einander überlagernden Bewegungen in Richtung D und E werden mittels eines Exzenters erzeugt. Derartige Schwingstemmmeißel sind bekannt. Durch den Schwingstemmeißel 16 können die beiden Stütznuten 11 in den aneinanderliegenden Rahmenhölzern gleichzeitig von den Stirnseiten 1d her in die Rahmenhölzer in der gewünschten Länge l eingestemmt werden.

Für alle drei vorhergehend beschriebenen Verfahrensweisen gilt gemeinsam, daß das Längsprofilieren der Rahmenhölzer, bei dem auch die Glashalteleisten herausgetrennt werden können, erst erfolgt, nachdem die Stütznuten 11 und auch die Zapfen 3 sowie die Schlitze 4 hergestellt sind.

Damit zur Herstellung von Rahmenhölzern auch Holz schlechterer Qualität verwendet werden kann, werden Rahmenhölzer manchmal aus mehreren, miteinander verleimten Holzschichten hergestellt. Diese Schichten sind in Figur 2 mit g bzw. s bezeichnet, wobei die beiden äußeren Schichten aus Holz guter Qualität und die mittlere Schicht s aus Holz schlechterer Qualität besteht. Da die Glashalteleisten, die beim Längsprofilieren aus den Rahmenhölzern herausgetrennt werden, aus Holz guter Qualität bestehen müssen, können sie nur aus der in Figur 2 oben liegenden Schicht g herausgetrennt werden. Die Lage der Glashalteleiste 10 ist in Figur 2 mit strichpunktierten Linien angedeutet. Sie liegt genau in der gleichen Höhe, in der auch die Stütznut 11 eingebracht werden muß. Da jedoch die Stütznut nur an jedem Ende des vertikalen Rahmenholzes 1 auf der Länge l bzw. L eingearbeitet wird und dieser Bereich nicht mehr für die Erzeugung der Glashalteleisten benötigt wird, kollidieren die Stütznuten 11 nicht mit der Glashalteleiste. Wie aus Figur 4 ersichtlich ist, werden mittels des Fingerfräsers F die Endflächen 10a der Glashalteleisten auf Gehrung gefräst. In diese Endflächen 10a tauchen zwar die beiden Scheibenfräser 13 noch teilweise ein. Dies spielt jedoch keine Rolle, da die Endflächen 10a im Einbauzustand der Glashalteleisten nicht mehr sichtbar sind.

Bei den heute gebräuchlichen Fensterflügelrahmenkonstruktionen sind die vorstehenden Stützfedern beim eingebauten Fensterflügelrahmen an den horizontalen Rahmenhölzern vorgesehen, weshalb bei dem vorstehend beschriebenen Ausführungsbeispiel die Stütznuten auch nur an den vertikalen Rahmenhölzern eingearbeitet werden. Sofern jedoch bei einer anderen Konstruktion die Stützfedern an den vertikalen Rahmenhölzern ausgebildet sind, dann gilt das, was oben für die vertikalen Rahmenhölzer ausführlich beschrieben wurde, sinngemäß für die horizontalen Rahmenhölzer. Es sind dann die Stütznuten nur an den horizontalen Rahmenhölzern und auch nur im Bereich der Schlitze und Zapfen mit einer Länge vorzusehen, die der der Stützfeder entspricht oder nur geringfügig länger ist als diese.

## Patentansprüche

1. Fensterflügelrahmen, bestehend aus zwei ersten Rahmenhölzern und zwei senkrecht zu diesen angeordneten zweiten Rahmenhölzern, die durch an ihren Enden vorgesehene Zapfen- und Schlitzverbindungen an den vier Ecken des Rahmens miteinander verbunden sind, wobei die zweiten Rahmenhölzer im Bereich ihrer Überschlagteile an ihren Enden jeweils eine sich in der Rahmenebene über die ganze Breite des Überschlagteiles erstreckende, etwa 3 - 6 mm über den Grund des dort befindlichen Schlitzes vorstehende Stützfeder aufweisen und an den ersten Rahmenhölzern im Bereich ihrer Anschlagteile an deren den Glashalteleisten zugekehrten Innenseiten zum Eingriff der Stützfedern Stütznuten vorgesehen sind, deren Querschnitt dem der Stützfedern entspricht, dadurch gekennzeichnet, daß Stütznuten (11) nur an den ersten Rahmenhölzern (1) und auch nur im Bereich der Schlitze (4) und Zapfen (3) vorgesehen sind, wobei die Länge (L) jeder Stütznut (11) von der zugehörigen Stirnseite (1d) des Rahmenholzes (1) nur der Breite (B) des Überschlagteiles (1b) bzw. der Länge (l) der Stützfeder (9) entspricht oder nur geringfügig länger ist als diese.

2. Fensterflügelrahmen nach Anspruch 1, dadurch gekennzeichnet, daß die Länge (l) der Stütznut (11) an ihrem Nutgrund der Breite (B) des Überschlagteiles (1b) entspricht.

3. Verfahren zur Herstellung der ersten Rahmenhölzer für einen Fensterflügelrahmen gemäß Anspruch 1 oder 2, bei dem die Rahmenhölzer einzeln oder paarweise an ihren Enden abgelängt, an ihren Enden durch Querprofilieren mit Zapfen und Schlitzen versehen, an ihren Innanseiten längsprofiliert und im Bereich ihrer Überschlagteile an ihren Innenseiten mit Stütznuten versehen werden, dadurch gekennzeichnet, daß die Stütznuten nach dem Ablängen oder im Anschluß an das Querprofilieren und vor dem Längsprofilieren der Rahmenhölzer in einem gesonderten Arbeitsgang nur in die Endenbereiche der späteren Innenseiten mittels Scheibenfräser oder einer Stemmvorrichtung von den Stirnseiten jeden Rahmenholzes her in einer Länge eingearbeitet werden, die gleich der Breite des Überschlagteiles ist oder nur geringfügig länger ist als diese.

4. Verfahren nach Anspruch 3, dadurch gekennzeichnet, daß nach dem Ablängen mittels eines Fingerfräsers, dessen Achse parallel zurLängsrichtung der Rahmenhölzer angeordnet ist, und der an seinem freien Ende kegelförmig ausgebildet ist, im Bereich der Zapfen und Schlitze eine Ausnehmung erzeugt wird und dabei das Ende der Glashalteleiste auf Gehrung bearbeitet, und daß dann mit einem Scheibenfräser die Stütznut in die Seitenwände der Ausnehmung eingefräst wird, wobei der Schaft des Scheibenfräsers und der nicht in Eingriff mit dem Rahmenholz befindliche Teil des Scheibenfräsers in der Ausnehmung bewegt wird.

5. Verfahren nach Anspruch 3, dadurch gekennzeichnet, daß zum Einarbeiten der Stütznut ein motorisch angetriebener Schwing-Stemmeißel verwendet wird.
